# FASCICULE DE BREVET EUROPEEN

(11) **EP 2 004 403 B1**
(45) Date de publication et mention de la délivrance du brevet: **18.09.2013**
(21) Numéro de dépôt: 07731881.4
(22) Date de dépôt: 05.04.2007
(51) Int. Cl.: B32B 37/26

(54) **PROCEDE DE FABRICATION D'UN COMPLEXE INCLUANT UNE COUCHE SUPPORT PRESENTANT UNE TEXTURE SPECIFIQUE**
VERFAHREN ZUR HERSTELLUNG EINES KOMPLEXES MIT EINER EINE BESTIMMTE STRUKTUR AUFWEISENDEN STÜTZSCHICHT
METHOD OF MANUFACTURING A COMPLEX INCLUDING A SUPPORT LAYER HAVING A SPECIFIC TEXTURE

(30) Priorité: 10.04.2006 FR 0651295
(43) Date de publication de la demande: 24.12.2008
(73) Titulaire: Chomarat Textiles Industries, 07160 Le Cheylard (FR)
(72) Inventeur: FERRAND, Olivier, F-07160 Le Cheylard (FR); SANIAL, Philippe, F-07240 Vernoux En Vivarais (FR)
(74) Mandataire: Palix, Stéphane
(86) Numéro de dépôt international: PCT/FR2007/051079
(87) Numéro de publication internationale: WO 2007/116190

(56) Documents cités:
- DE-A1- 4 314 713
- GB-A- 2 250 232
- US-A1- 2004 253 404
- US-B1- 6 497 833

## Description

### Domaine Technique

La présente invention concerne un procédé de fabrication de complexe multicouche, utilisable comme matériau de revêtement, dans divers secteurs. Parmi les domaines d'application, on peut notamment citer l'ameublement, l'automobile en ce qui concerne l'habillage des parois internes tels que tableaux de bord, portes et autres, ainsi que le secteur de la bagagerie.

L'invention vise plus particulièrement un procédé permettant de conférer au complexe un état de surface ou une texture de grande qualité, qu'il s'agisse d'un grainage ou d'un glaçage.

### Techniques antérieures

De façon générale, les matériaux utilisés pour les applications de revêtement, par exemple dans le domaine de l'automobile ou de la bagagerie, comportent une couche support qui assure en particulier la tenue mécanique de l'ensemble. Cette couche support est recouverte d'une couche de surface, réalisée à base d'un matériau polymérique, et qui présente l'état de surface souhaité, c'est-à-dire glacé ou plus ou moins grainé.

Les matériaux utilisables pour former la couche support peuvent être très variés selon la ou les fonction(s) que remplit de manière complémentaire le matériau de revêtement. Ainsi, dans le domaine de la bagagerie, pour assurer une tenue mécanique et une résistance à la déchirure, la couche support peut être à base d'un textile, tissé ou tricoté. Dans le domaine de l'habillage des parois internes de véhicules, la couche support peut inclure une mousse destinée à assurer une qualité de confort par une certaine compressibilité, ainsi qu'une isolation phonique. Lorsque le revêtement est employé en tant que tapis de sol ou assimilé, la couche support peut alors être constituée d'une masse lourde à base d'une composition d'un ou plusieurs matériaux polymériques, du type polyéthylène, incluant une fraction de charges minérales par exemple.

Parmi les techniques utilisées pour assembler la couche de support et la couche de surface, la plus répandue consiste à opérer par calandrage à chaud, par passage des deux couches superposées entre deux cylindres, dont l'un au moins est chauffant. De telles techniques sont notamment décrites dans le document EP-0 208 627, EP-0 986 463 ou EP-1 448 383, dans différentes configurations de composition du complexe. De manière avantageuse, d'un point de vue industriel, la couche de support à base de matériau polymérique peut être extrudée au moment du calandrage, juste de manière à être superposée à la couche de support en amont des rouleaux de calandrage.

En fonction des applications souhaitées, l'état de surface de la couche de support peut être très varié. Ainsi, il peut être souhaitable dans certaines applications d'obtenir un état de surface parfaitement lisse, soit avec un effet glacé, de manière à générer des reflets, soit encore avec une texture mate. Pour d'autres applications, il peut être souhaitable que la couche de surface présente un aspect grainé, avec des motifs dont les formes et dimensions peuvent être déclinées de manière très large. De tels aspects grainés peuvent notamment être employés dans le domaine de la bagagerie ou de l'habillage de sièges de véhicules pour donner un aspect similaire à celui du cuir, avec les multiples formes de grain que le cuir peut adopter.

Cet effet de surface de la couche extérieure est conféré par la texture du rouleau de calandrage qui vient presser la couche extérieure. Ainsi, le rouleau presseur, généralement métallique présente une texture ou un état de surface complémentaire à l'effet recherché pour le complexe à obtenir. On conçoit que la réalisation par gravure de rouleaux presseurs comportant ce type de motif est relativement coûteuse. Un tel inconvénient limite donc également la possibilité de faire varier les effets d'une production à l'autre, puisqu'il serait alors nécessaire de disposer d'une batterie de rouleaux comportant chacun les motifs souhaités.

Un autre inconvénient de la technique employant des rouleaux gravés provient du fait que les motifs doivent, sur le complexe obtenu, se répéter avec un pas égal à la circonférence du rouleau presseur. Il y a donc là une limitation à la réalisation de motifs totalement aléatoire. En outre, les empreintes des motifs sur le rouleau doivent également présenter une continuité sur la circonférence de ces mêmes rouleaux.

Un autre inconvénient majeur rencontré avec l'emploi de rouleaux gravés provient du fait que la définition et la finesse des motifs est limitée à la finesse de gravure du rouleau. Ainsi, il n'est pas possible de réaliser des motifs extrêmement petits, car leur réalisation technique est soit quasiment impossible, soit particulièrement coûteuse. En outre, avec les procédés de calandrage traditionnels, il est nécessaire de déposer une couche de vernis après grainage, qui modifie l'état de surface obtenu par les rouleaux grainés.

Il est également connu d'après le document US 2004/0253404 d'agencer des matériaux multicouches comprenant une couche de matériau polymérique déposée sur une feuille de papier, qui permet d'imprimer un motif particulier à la couche de matériau polymérique.

Un objectif de l'invention est de fournir un procédé qui permette d'obtenir une finesse de grain et plus généralement une qualité d'état de surface largement supérieure à ce qui peut être obtenu avec des calandres à rouleaux gravés. Un autre objectif est d'obtenir des produits très souples, avec de bonnes qualités de résistances chimique et mécanique.

Un autre objectif de l'invention est de permettre une grande diversité de motifs réalisables, en éliminant l'inconvénient résultant de l'emploi de rouleaux gravés.

### Exposé de l'invention

L'invention concerne donc un procédé de fabrication d'un complexe incluant une couche support associée à une couche de surface. La couche support peut être à base d'un textile, d'une mousse ou encore d'une masse lourde, tandis que la couche de surface est à base d'un matériau polymérique, et présente un état de surface prédéterminé, du type glacé, grainé, mat ou brillant.

Conformément à l'invention, ce procédé se caractérise en ce qu'il consiste :
■ à déposer une couche d'enduction du matériau polymérique de la couche de surface, sur une feuille de papier possédant un état de surface particulier, Cet état de surface est complémentaire de l'état de surface souhaité pour le complexe à obtenir ;
■ à calandrer la couche de support avec une couche intermédiaire à base d'un autre matériau polymérique obtenue par extrusion directement en amont de la calandre, et l'ensemble formé par la feuille de papier et la couche d'enduction ;
■ à retirer la feuille de papier, de manière à laisser apparaître sur la couche de surface la texture imprimée dans la matière de la couche de surface par la texture de la feuille de papier.

Autrement dit, l'invention consiste à utiliser un papier présentant une texture déterminée, avec une variété et une finesse très importantes, de manière à générer des motifs complémentaires sur la couche d'enduction lors de l'opération de calandrage. Le pelage de la feuille caractéristique permet ensuite de révéler l'état de surface sur la couche extérieure. Bien que la profondeur des motifs ainsi obtenus soit légèrement inférieure à celle que l'on peut obtenir avec des rouleaux gravés, le procédé se révèle particulièrement intéressant dans la mesure où la finesse des motifs obtenus est en revanche nettement supérieure à ce que l'on peut obtenir avec des rouleaux gravés. En effet, la réalisation des motifs en négatif sur la feuille de papier caractéristique se fait par des procédés spécifiques de gravure qui permettent d'atteindre des niveaux de finesse extrêmement intéressants.

Un autre avantage de l'invention réside dans l'emploi d'un système de calandre traditionnel, dans lequel les rouleaux employés sont totalement lisses, puisque l'effet de surface est engendré par la texture de la couche de papier caractéristique.

En pratique, la couche de surface est associée à la couche support par l'emploi d'une couche intermédiaire, à base d'un autre matériau polymérique. Ainsi, la couche support reçoit cette couche intermédiaire qui, elle-même, vient alors au contact du liant chimique déposé sous la couche d'enduction qui formera la future couche de surface. L'emploi de cette couche intermédiaire permet de lier la couche support à la couche de surface, et de donner du volume au complexe ainsi obtenu. Cette couche intermédiaire est obtenue par extrusion, juste avant d'être complexée entre la couche support et le papier revêtu de la couche d'enduction. Dans ce cas, dans la mesure où elle se trouve à une température élevée, correspondant à celle en sortie d'extrudeuse, l'apport de chaleur qu'elle réalise facilite le complexage entre les différentes couches. Il est alors possible d'utiliser une calandre à une température de quelques dizaines de degrés (°C), nettement inférieure à la température des calandres utilisées pour des procédés de colaminage.

Cette couche intermédiaire peut être multicouche. Elle peut par exemple être constituée de plusieurs couches élémentaires co-extrudées en amont de la calandre.

Comme déjà évoqué, l'emploi du papier caractéristique permet d'obtenir de multiples états de surface, selon que la feuille de papier est lisse ou grainée.

En pratique, dans le cas où la couche d'enduction et la couche intermédiaire sont de natures chimiques incompatibles, il peut être utile de déposer un liant chimique sur face de la couche d'enduction destinée à venir au contact de la couche intermédiaire.

Ce liant chimique peut être déposé sur la couche d'enduction par un procédé d'héliogravure, permettant de déterminer précisément la quantité de liant nécessaire au collage de la couche d'enduction sur la couche support, ou la couche intermédiaire le cas échéant

En pratique, différentes matières peuvent être employées pour former la couche d'enduction extérieure, en fonction des matériaux de la couche intermédiaire. Ainsi, dans le cas où la couche intermédiaire est à base d'une résine thermoplastique, incluant par exemple des polyoléfines, la couche d'enduction formant la couche de surface peut être à base de polyuréthanne. Il est également possible d'utiliser des couches intermédiaires à base de matériaux plastifiés, du type polychlorure de vinyle. Dans ce cas, les enductions utilisables peuvent être de type acrylique ou polyuréthanne, voire des résines à base de composants fluorés ou de silicone ou autre en fonction des applications.

### Description sommaire des figures

La manière de réaliser l'invention, ainsi que les avantages qui en découlent, ressortiront bien de la description du mode de réalisation qui suit, donné à titre d'exemple, à l'appui de l'unique figure, qui représente schématiquement une installation mettant en oeuvre le procédé de l'invention.

### Manière de réaliser l'invention

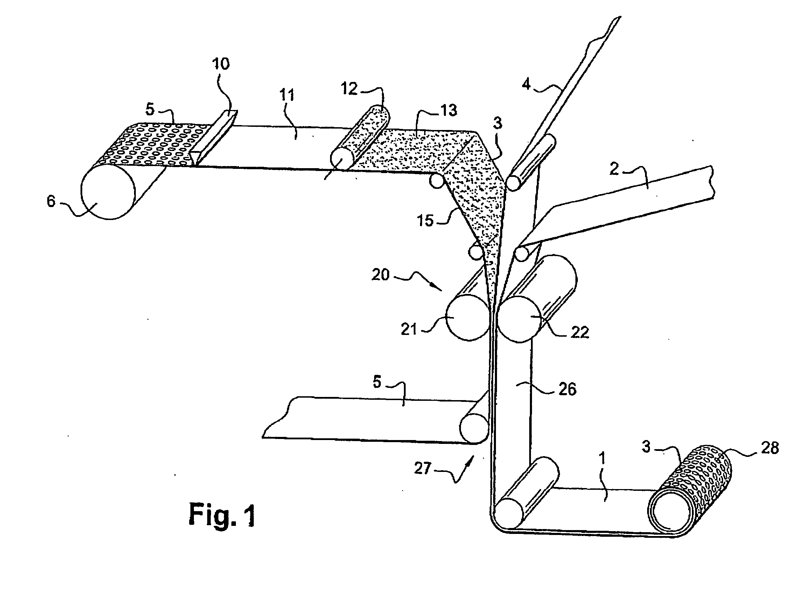

Comme illustré à la figure 1, le procédé conforme à l'invention permet de réaliser un complexe (1) associant une couche support (2), en combinaison avec une couche intermédiaire (4), et ce, en utilisant une feuille de papier (5) présentant un état de surface déterminé. Plus précisément, le procédé consiste dans un premier temps à enduire la feuille de papier (5) dévidée à partir du rouleau (6) au niveau du poste (10) d'enduction. Plus précisément, la face supérieure, qui sera récouverte de la couche d'enduction, présente un état de surface spécifique, qui peut être lisse, mat, ou grainé comme illustré de manière schématique à la figure 1. Le poste (10) permet donc le dépôt d'une couche d'enduction (11), typiquement à base d'un matériau de type acrylique ou polyuréthanne.

La couche d'enduction peut être déposée en plusieurs couches élémentaires successives. Dans une forme d'exécution particulière, le dépôt d'une première couche élémentaire a pour but de combler partiellement les espaces entre les reliefs du grain du papier. Cette première couche élémentaire est réalisée avec une matière d'une première couleur. Le dépôt d'une seconde couche élémentaire d'enduction, avec matière d'une autre couleur, permet de réaliser des effets "deux tons" sur le complexe.

Dans le cas où elle est incompatible avec la couche intermédiaire, cette couche d'enduction, d'une épaisseur typiquement comprise entre 10 et 50 µm. reçoit au niveau du poste (12) le dépôt d'un liant chimique (13). Ce liant a pour fonction de permettre le collage de la couche d'enduction (11) avec la couche intermédiaire. Ce liant chimique est déposé par une technique d'héliogravure type 1000 points, ou le plus généralement par toute technique permettant d'obtenir une bonne répartition de ce liant chimique sur la face apparente de la couche d'enduction (11). La couche d'enduction doit être aussi plane que possible, et ne plus laisser apparaître les reliefs des grains du papier, pour que le dépôt du liant soit optimal. Typiquement, le liant chimique est avantageusement être à base de molécules incluant des sites polaires, tels que les fonctions acides, esters, ou des sites chlorés.

Ainsi, l'ensemble (15) formé par la feuille de papier (5), la couche d'enduction (11) recouverte du liant (13), parvient au niveau du poste de calandrage (20).

La couche support (2) qui, comme évoquée ci-avant, peut être de nature très variée, et notamment inclure des textiles, des mousses ou des masses lourdes, est également acheminée au niveau du poste de calandrage (20). Dans l'exemple illustré, une couche intermédiaire (4) à base de matériau thermoplastique du type PVC, polyoléfines ou autres, est également acheminée au niveau du poste de calandrage (20). Cette couche intermédiaire peut être obtenue par extrusion directement en amont de la calandre. Dans ce cas, les calories nécessaires au complexage sont en partie apportées par cette couche intermédiaire en cours de refroidissement, puisque la couche intermédiaire sort de l'extrudeuse à une température élevée, de l'ordre de 170°C pour le PVC, et 230°C pour des bases polyoléfines.

Le poste de calandrage (20) présente différents rouleaux presseurs, dont l'écartement est déterminé en fonction de l'épaisseur souhaitée pour le futur complexe. Les rouleaux (21,22) présentent des duretés différentes pour absorber des variations d'épaisseur du complexe en cours de formation. En particulier, un rouleau peut être métallique, et l'autre posséder un revêtement caoutchouté. Ces rouleaux présentent une surface extérieure lisse, et plus généralement dont l'état de surface n'est pas réellement optimisé, dans la mesure où il n'aura pas d'effet direct sur l'effet de surface du complexe final. L'un et/ou l'autre des ces rouleaux peuvent être régulés en température, pour maintenir le complexe à température optimale..

A la sortie du poste de calandrage (20), l'ensemble (26) incluant donc la couche support (2) calandrée avec la couche intermédiaire (3) et l'ensemble (15), arrive à un poste de pelage (27), au niveau duquel la feuille de papier (5) est retirée. Le complexe (1) ainsi obtenu peut être renvidé, et la couche de surface (3) présente alors un aspect de surface (28) complémentaire de celui de la feuille de papier (5). Le papier est ainsi réutilisable ultérieurement.

A titre d'exemple, on peut réaliser des complexes ayant une très grande finesse de grains du type connue sous l'appellation "effet Lotus".

Les exemples de réalisation ci-dessous sont donnés à titre d'illustration, et ne limitent en aucun cas la portée de l'invention.

### Exemple 1

On choisit comme :
- couche support, un textile jersey de 180g/m²;
- couche intermédiaire, un TPO de masse 3 00g/m²;
- liant, une polyoléfine modifiée de masse 5 g/m²;
- couche d'enduction, un polyuréthane 20g/m²

La température d'arrivée de la matière au niveau de la calandre est voisine de 210°C, pour une vitesse de passage de quelques mètres par minute.

Le papier présente un grainage de type "cuir". Le complexe obtenu peut être utilisé dans le domaine de l'ameublement, ou de l'automobile, par exemple pour réaliser des soufflets de levier de vitesse.

### Exemple 2

On choisit comme:
- couche support, une mousse polyoléfine réticulée, d'épaisseur 2,5mm, et de densité 67 kg/m³
- couche intermédiaire, un TPO de masse 400g/m², colorée
- liant: une polyoléfine modifiée, de masse 5 g/m²
- couche d'enduction, un polyuréthane, de masse 20g/m²

La température d'arrivée de la matière au niveau de la calandre est voisine de 220°C, pour une vitesse de passage de quelques mètres par minute. Le papier présente un grain "technique", c'est-à-dire à motifs géométriques. Le complexe obtenu peut être utilisé pour réaliser des habillages de planche de bord de véhicules.

Il ressort de ce qui précède que le procédé conforme à l'invention présente l'avantage notable de permettre la réalisation de l'effet de surface d'une finesse largement supérieure à ce qui est généralement obtenu avec des cylindres à rouleaux gravés ou polis.

Le procédé présente également l'avantage important de pouvoir être mis en oeuvre sur une machine à calandrer dont les rouleaux sont lisses, et permettent donc d'obtenir les différents effets de surface sans changement du rouleau venant au contact de la couche de surface.

## Revendications

1. Procédé de fabrication d'un complexe (1) incluant une couche support (2), à base d'un textile, d'une mousse ou d'une masse lourde, associée à une couche de surface (3) à base d'un matériau polymérique présentant un état de surface prédéterminé, consistant en les étapes suivantes :
■ dépôt d'une couche d'enduction (11) dudit matériau polymérique de la couche de surface sur une feuille de papier (5) possédant un état de surface complémentaire à l'état de surface prédéterminé du complexe à obtenir ; et ***caractérisé* en ce que** ledit procédé comprend consécutivement les étapes suivantes:
■ calandrage de la couche support avec une couche intermédiaire (4) à base d'un second matériau polymérique obtenue par extrusion directement en amont de la calandre, et l'ensemble (15) formé de la feuille de papier (5) et de la couche d'enduction (11) ;
■ retrait de la feuille de papier (5).

2. Procédé selon la revendication 1, ***caractérisé* en ce que** la couche intermédiaire (4) est multicouche.

3. Procédé selon la revendication 1, ***caractérisé* en ce que** l'état de surface de la feuille de papier (5) est lisse.

4. Procédé selon la revendication 1, ***caractérisé* en ce que** l'état de surface de la feuille de papier (5) est grainé.

5. Procédé selon la revendication 1, ***caractérisé* en ce que** la couche intermédiaire (4) est à base d'une résine thermoplastique, incluant des polyoléfines.

6. Procédé selon la revendication 1, ***caractérisé* en ce que** la couche intermédiaire (4) est à base d'un matériau plastifié, du type polychlorure de vinyle.

7. Procédé selon la revendication 1, ***caractérisé* en ce que** la couche d'enduction (3) est à base d'un matériau choisi dans le groupe comprenant les acrylique et les polyuréthannes.

8. Procédé selon la revendication 1, **caractérisé en ce qu'**il comporte une étape de dépôt d'un liant chimique (13) sur face de la couche d'enduction (11) destinée à venir au contact de la couche intermédiaire.

9. Procédé selon la revendication 8, ***caractérisé* en ce que** le liant chimique (13) est déposé par héliogravure.

## Patentansprüche

1. Verfahren zur Herstellung eines Verbundmaterials (1), das eine Trägerschicht (2) auf Grundlage eines Gewebes, eines Schaumstoffs oder einer schweren Masse umfasst, die mit einer Oberflächenschicht (3) auf Grundlage eines Polymermaterials verbunden wird, die eine vorbestimmte Oberflächenbeschaffenheit aufweist, aus den folgenden Schritten bestehend:
• Abscheiden einer Beschichtungsschicht (11) des Polymermaterials der Oberflächenschicht auf einem Papierbogen (5), der eine zur vorbestimmten Oberflächenbeschaffenheit des zu erhaltenden Verbundmaterials komplementäre Oberflächenbeschaffenheit besitzt; und
**dadurch gekennzeichnet, dass** das Verfahren nacheinander die folgenden Schritte umfasst:
• Kalandrieren der Trägerschicht mit einer Zwischenschicht (4) auf Grundlage eines zweiten Polymermaterials, das durch Extrudieren direkt von der Kalanderwalze erhalten wird, und der aus dem Papierbogen (5) und der Beschichtungsschicht (11) gebildeten Einheit (15);
• Abziehen des Papierbogens (5).

2. Verfahren nach Anspruch 1, **dadurch gekennzeichnet, dass** die Zwischenschicht mehrlagig ist.

3. Verfahren nach Anspruch 1, **dadurch gekennzeichnet, dass** die Oberflächenbeschaffenheit des Papierbogens (5) glatt ist.

4. Verfahren nach Anspruch 1, **dadurch gekennzeichnet, dass** die Oberflächenbeschaffenheit des Papierbogens (5) gekörnt ist.

5. Verfahren nach Anspruch 1, **dadurch gekennzeichnet, dass** die Zwischenschicht (4) auf Grundlage eines Polyolefine enthaltenden thermoplastischen Harzes ist.

6. Verfahren nach Anspruch 1, **dadurch gekennzeichnet, dass** die Zwischenschicht (4) auf Grundlage eines plastifizierten Materials der Art Polyvinylchlorid ist.

7. Verfahren nach Anspruch 1, **dadurch gekennzeichnet, dass** die Beschichtungsschicht (3) auf Grundlage eines Materials ist, das aus der Gruppe ausgewählt ist, die Acryle und Polyurethane umfasst.

8. Verfahren nach Anspruch 1, **dadurch gekennzeichnet, dass** es einen Schritt des Abscheidens eines chemischen Bindemittels (13) auf die Seite der Beschichtungsschicht (11) umfasst, die dazu bestimmt ist, mit der Zwischenschicht in Kontakt zu kommen.

9. Verfahren nach Anspruch 1, **dadurch gekennzeichnet, dass** das chemische Bindemittel (13) durch Tiefdruck aufgebracht wird.

## Claims

1. Method for manufacturing a complex (1) including a support layer (2), based on a textile, a foam or a heavy mass, combined with a surface layer (3) based on a polymeric material having a predefined surface state, consisting in the following steps :
■ depositing a coating film (11) of said polymeric material of the surface layer on a sheet of paper (5) having a surface state complementary to the predefined surface state of the complex to be obtained; and **characterized in that** said process includes the following successive steps :
■ calendering the support layer with an intermediate layer (4) based on a second polymeric material obtained by extrusion directly upstream of the calender, and the assembly (15) formed from the sheet of paper (5) and the coating film (11);
■ withdrawing the sheet of paper (5).

2. Method according to Claim 1, ***characterized* in that** the intermediate layer (4) is a multilayer.

3. Method according to Claim 1, ***characterized* in that** the surface state of the sheet of paper (5) is smooth.

4. Method according to Claim 1, ***characterized* in that** the surface state of the sheet of paper (5) is grainy.

5. Method according to Claim 1, ***characterized* in that** the intermediate layer (4) is based on a thermoplastic resin, including polyolefins.

6. Method according to Claim 1, ***characterized* in that** the intermediate layer (4) is based on a plasticized material, of the polyvinyl chloride type.

7. Method according to Claim 1, ***characterized* in that** the coating film (3) is based on a material selected from the group comprising acrylics and polyurethanes.

8. Method according to Claim 1, ***characterized* in that** it comprises a step of depositing a chemical binder (13) on the face of the coating film (11) intended to be in contact with the intermediate layer.

9. Method according to Claim 8, ***characterized* in that** the chemical binder (13) is deposited by photogravure.
